# EUROPEAN PATENT SPECIFICATION

(11) **EP 4 028 295 B1**
(45) Date of publication and mention of the grant of the patent: **17.07.2024**
(21) Application number: 20761825.7
(22) Date of filing: 26.08.2020
(51) Int. Cl.: B60T 8/88, B60T 8/92, B60T 8/172

(54) **ELECTROMECHANICAL BRAKE SYSTEM AND CONTROL METHOD THEREOF**
ELEKTROMECHANISCHES BRAMSSYSTEM UND DESSEN STEUERUNGSVERFAHREN
SYSTÈME ELECTROMÉCANIQUE DE FREINS ET MÉTHODE DE COMMANDE

(30) Priority: 10.09.2019 CN 201910852949
(43) Date of publication of application: 20.07.2022
(73) Proprietor: Haldex Aktiebolag, 261 24 Landskrona (SE)
(72) Inventor: NILSSON, Anders, Shanghai, 201804 (CN)
(74) Representative: Müller Schupfner & Partner Patent- und Rechtsanwaltspartnerschaft mbB (Muc)
(86) International application number: PCT/EP2020/073828
(87) International publication number: WO 2021/047910

(56) References cited:
- WO-A1-2019/043862
- US-A1- 2018 194 353

## Description

### FIELD OF THE INVENTION

The present invention relates to the technical field of electronic machinery control, and more particularly to an electromechanical brake system and a control method thereof.

### PRIOR ART

Vehicles are essential to the daily traffic of people and have a high penetration rate. In order to avoid obstacles around the car, it is often necessary to use a brake device to reduce the moving speed of vehicles or even stop the movement of vehicles during driving.

The conventional brake device is usually a brake disc that uses a mechanical drive such as a hydraulic pressure structure to drive brake pads against the brake disc for frictionally resisting its rotation, thereby achieving the purpose of braking.

In order to enhance the braking ability of vehicles, especially large vehicles, and to simplify the structure of brake system, the prior art further proposes an electromechanical brake (EMB) system.

An actuator of the conventional electromechanical brake system may comprise an electric power source and an electric brake device powered by the electric power source to generate a braking force. The electric brake device may further comprise a motor for generating a braking force, and a mechanical actuator driven by the motor.

In general, when a driver depresses the brake pedal, the motor controller can control the rotation of the motor to drive the mechanical actuator to generate the braking force after receiving a command.

In a brake system using a transmission medium such as a hydraulic pressure or a pneumatic pressure, the brake clamping force is reduced as the pressure drops due to, for example, a leak. Therefore, when an abnormality in the brake system causes the pressure drop, the driver will obviously feel a braking performance degradation caused by insufficient braking force.

However, in the electromechanical brake system, since the source of the braking force is an electrically driven motor, this characteristic causes the braking force generated by the electric brake device to be unaffected even when the actual energy level of the electric power source is insufficient. The driver cannot intuitively feel the abnormality of the brake system through the braking performance degradation, which greatly affects the driving safety of the vehicle.

WO 2019/043862 A1 corresponding to DE 11 2017 007 981 T5 discloses an electro-fluidic brake system wherein the brake force at a wheel of a vehicle is produced by a fluidic pressure which is controlled electrically dependent on the depression of a brake pedal. A control method determines whether in a previous termination of the operation of the brake system the termination was a normal or abnormal termination. Furthermore, the control method determines if the start of operation is manually caused by the driver or caused automatically when starting the operation of the vehicle. The control method also performs a plurality of diagnoses when starting the operation. In the case that the previous operation has been terminated in an abnormal way and the actual start of operation of the vehicle was triggered manually by the driver at least some of the diagnoses are not executed for saving time. In the case that the starter of the engine is triggered after an abnormal termination of the previous operation with a reduced performance of the battery or when the vehicle is located in a cold territory the starting process of the engine requires a high amount of energy which leads to a drop of the voltage level of the battery below a threshold value. The control method automatically terminates the operation of the brake ECU. The number of diagnoses which are not executed might depend on the actual velocity of the vehicle, on the inclination of the road, on the stroke of the brake pedal depressed by the driver or in an automatic brake avoiding system monitoring the distance to neighboring vehicles.

Further prior art is known from US 2018/194353 A1.

### SUMMARY

A brief overview of one or more aspects is provided below to provide a basic understanding of these aspects. The summary is not an extensive overview of all of the aspects that are contemplated, and is not intended to identify key or decisive elements in all aspects. The sole purpose of the summary is to present some concepts of one or more aspects in a simplified form as a prelude to the more detailed description that is presented later.

In order to overcome the defects in the prior art for a vehicle using an electromechanical brake system that the driver is unable to know the abnormality of the brake system in time, the present invention provides an electromechanical brake system and a control method thereof.

The present invention solves the technical problem by the following technical solutions.

An electromechanical brake system, which is defined in the appended independent claim 1.

Optionally, the electromechanical brake system is configured to stop reducing the braking performance of the electric brake device when the braking demand is higher than a predetermined emergency threshold.

Optionally, the electromechanical brake system comprises a power diagnostic module for detecting the actual energy level and/or a performance of the electric power source.

Optionally, the braking performance is reduced to a predetermined level.

Optionally, the electromechanical brake system is configured to output a warning signal when the actual energy level of the electric power source is lower than a warning threshold, the warning threshold is higher than the predetermined threshold.

Optionally, the electromechanical brake system is configured to carry out automatic stopping when the actual energy level of the electric power source is lower than an automatic stopping threshold, the automatic stopping threshold is lower than the predetermined threshold. Optionally, parking brake is applied after the automatic stopping is completed.

Optionally, the braking performance comprises braking force and/or braking response time.

Optionally, the electromechanical brake system comprises a plurality of the electric power sources, each of the electric power sources supplies power for at least one of the electric brake devices, the electromechanical brake system is configured to reduce braking performance of the electric brake device powered by any one of the electric power sources whose actual energy level is lower than the predetermined threshold or reduce braking performance of all of the electric brake devices when the actual energy level of any one of the electric power sources is lower than the predetermined threshold.

Optionally, the electromechanical brake system comprises an ECU (Electronic Control Unit), the ECU is configured to adjust braking performance of the electric brake device based on the received braking demand and the actual energy level of the electric power source.

Optionally, the electromechanical brake system comprises an axle control unit corresponding to an axle, each axle control unit controls electric brake devices at both ends of the axle, the axle control unit is configured to adjust braking performance of the electric brake device based on the received braking demand and the actual energy level of the electric power source.

Optionally, the electric power source comprises a capacitor-based power source and/or a battery.

A control method of electromechanical brake system, which is defined in the appended independent claim 12.

Optionally, the control method further comprises, stop reducing the braking performance of the electric brake device when the braking demand is higher than a predetermined emergency threshold.

Optionally, the control method further comprises, detecting the actual energy level and/or a performance of the electric power source through a power diagnostic module.

Optionally, the reducing braking performance of the electric brake device comprises, the braking performance is reduced to a predetermined level.

Optionally, the control method further comprises, outputting a warning signal when the actual energy level of the electric power source is lower than a warning threshold, the warning threshold is higher than the predetermined threshold.

Optionally, the control method further comprises, carrying out automatic stopping when the actual energy level of the electric power source is lower than an automatic stopping threshold, the automatic stopping threshold is lower than the predetermined threshold.

Optionally, parking brake is applied after the automatic stopping is completed.

Optionally, the braking performance comprises braking force and/or braking response time.

Optionally, the electromechanical brake system comprises a plurality of the electric power sources, each of the electric power sources supplies power for at least one of the electric brake devices, the adjusting braking performance of the electric brake device according to an actual energy level of the electric power source comprises, reducing braking performance of the electric brake device powered by any one of the electric power sources whose actual energy level is lower than the predetermined threshold or reducing braking performance of all of the electric brake devices when the actual energy level of any one of the electric power sources is lower than the predetermined threshold.

Optionally, the electromechanical brake system comprises an ECU, the control method comprises, adjusting, by the ECU, braking performance of the electric brake device based on the received braking demand and the actual energy level of the electric power source.

Optionally, the electromechanical brake system comprises an axle control unit corresponding to an axle, each axle control unit controls electric brake devices at both ends of the axle, the control method comprises, adjusting, by the axle control unit, braking performance of the electric brake device based on the received braking demand and the actual energy level of the electric power source.

Optionally, the electric power source comprises a capacitor-based power source and/or a battery.

A computer readable medium, which is defined in the appended claim 23.

The positive effects of the present invention are as follows.

The present invention can timely adjust the braking performance of the electric brake device and promptly inform the driver of the braking situation, so that the driver can obtain an intuitive braking feeling during the driving process, thereby effectively improving the safety of the vehicle, and at the same time it saves the energy of the electric power source and avoids unnecessary energy consumption, thereby playing a good role in protecting the electromechanical brake system.

### BRIEF DESCRIPTION OF THE DRAWINGS

The above features and advantages of the present invention will be better understood after reading the detailed description of the embodiments of the present invention in conjunction with the following figures. In the figures, components are not necessarily drawn to scale, and components having similar related features may have the same or similar reference numerals.
- **Fig. 1**: shows a system architecture diagram of an electromechanical brake system according to an embodiment of the present invention.
- **Fig. 2**: shows a system architecture diagram of an electromechanical brake system according to another embodiment of the present invention.
- **Fig. 3**: shows a system architecture diagram of an electromechanical brake system according to another embodiment of the present invention.
- **Fig. 4**: is shows a schematic diagram of changes in braking performance according to an embodiment of the present invention.
- **Fig. 5**: shows a schematic diagram of voltage and braking performance according to an embodiment of the present invention.
- **Fig. 6**: shows a schematic diagram of voltage and braking performance according to another embodiment of the present invention.
- **Fig. 7**: shows a schematic diagram of braking performance and braking demand according to an embodiment of the present invention.
- **Fig. 8**: shows a flowchart of a control method of electromechanical brake system according to an embodiment of the present invention.

### DETAILED DESCRIPTION

The present invention is described in detail below with reference to the drawings and specific embodiments. It is to be noted that the aspects described below in conjunction with the drawings and the specific embodiments are merely exemplary and are not to be construed as limiting the scope of the present invention.

The following description is presented to enable those skilled in the art to make and use the present invention. Various modifications and various uses in different applications will be readily apparent to those skilled in the art, and the general principles defined herein are applicable to a wide range of embodiments. Thus, the present invention is not limited to the embodiments set forth herein, but the scope of the broadest scope of the principles and novel features disclosed herein.

In the following detailed description, numerous specific details are set forth. However, it is apparent to those skilled in the art that the practice of the invention may not be limited to the specific details. In other words, well-known structures and devices are shown in block diagram form and not shown in detail to avoid obscuring the present invention.

In the description of the present invention, it should be noted that the terms "set", "install", and "connected" should be understood broadly, and may be a fixed connection, for example, unless otherwise specifically defined and defined. It may be a detachable connection, or an integral connection. It may be a mechanical connection or an electrical connection. It may be directly connected, or may be indirectly connected through an intermediate medium, and may be internal communication between the two elements. The specific meaning of the above terms in the present invention can be understood in a specific case by those skilled in the art.

The present invention provides an embodiment of an electromechanical brake (EMB) system, the electromechanical brake system comprises an electric power source and at least one electric brake device powered by the electric power source to generate a braking force responsive to a braking demand, the electromechanical brake system is configured to adjust braking performance of the electric brake device according to an actual energy level of the electric power source, so that the driver can obtain an intuitive braking feeling during the driving process, thereby effectively improving the safety of the vehicle, and at the same time it saves the energy of the electric power source.

In this embodiment, the actual energy level corresponds to the remaining useful amount of energy in an energy storage device, namely the electric power source, and may also be a correlation index for measuring the remaining useful amount of energy of the energy storage device. As long as it can be used to measure the remaining useful amount of energy of the energy storage device, it can be set according to actual conditions and user requirements.

An actuator of the electromechanical brake system may comprise a brake motor for generating the braking force, and a mechanical actuator driven by the brake motor. For example, in a disc brake, the mechanical actuator may comprise a transmission mechanism and a calliper. In a drum brake, the mechanical actuator may comprise a transmission mechanism and a brake shoe.

When a driver depresses the brake pedal, a corresponding brake demand is generated, and the controller controls the rotation of the brake motor according to the braking demand, thereby driving the mechanical actuator to generate the braking force.

When the driver releases the brake pedal, the controller reduces the braking force or completely releases the brake according to the braking demand.

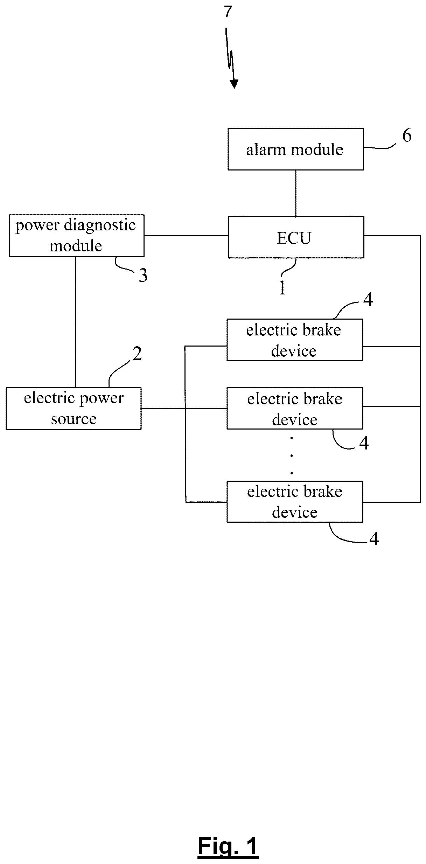

As an embodiment of the electromechanical brake system, as shown in Fig. 1, the electromechanical brake system 7 comprises an ECU 1, an electric power source 2, and at least one electric brake device 4.

In this embodiment, the electric power source 2 exemplarily employs or comprises a capacitor-based power source.

The above-mentioned electric power source 2 is mainly used to supply the above-mentioned electromechanical brake system 7 with the energy required to drive the brake motor that generates the braking force. In order to meet the demand for the braking force generated by the motor, the electric power source 2 comprises, but is not limited to, an ultra-capacitor group composed of a plurality of ultra-capacitor units in series, in parallel or a combination of series and parallel connection.

The electromechanical brake system 7 may obtain energy from an energy storage battery of the vehicle, and charge the electric power source 2 by means of prior art methods well known to those skilled in the art, such as voltage conversion. Therefore the electric power source 2 may directly output electric energy to the motor to generate a braking force in response to a brake demand.

Those skilled in the art may understand that the structure of the electric power source 2, and the solution that obtaining energy from an energy storage battery of the vehicle, are only specific embodiments provided in the present invention, mainly for more clearly showing the concept of the present invention to the public, and providing a feasible solution, but not intended to limit the scope of the invention.

For example, the electric power source 2 may comprise only a battery or a capacitor-based power source that may be directly powered by a production mechanism such as a vehicle engine. Moreover, the electric power source 2, in addition to employ a centralized arrangement that a single power source supplying energy to each electric brake device 4 as shown in Fig. 1, may also employ a distributed arrangement corresponding to the electric brake device 4. Or the electric brake device 4 at each end of each axle is powered by one electric power source 2.

In other embodiments, those skilled in the art may also use other means to obtain the energy required to drive the brake motor.

As another embodiment, as shown in Fig. 1, the electromechanical brake system 7 further comprises a power diagnostic module 3. The power diagnostic module 3 is communicatively connected to the electric power source 2.

The power diagnostic module 3 is configured to detect the performance of the electric power source 2, and to evaluate the power storage capability of the electric power source 2 based on its performance, thereby more accurately determining the actual energy level of the electric power source 2.

Specifically, when the electric power source 2 uses an energy storage battery, an ultra-capacitor group, or a combination thereof, its performance will attenuate with the use time, and its power storage capacity will decrease, that is, the maximum power storage capacity will be reduced. Therefore, the actual energy level is calculated by comprehensively evaluating the performance of various parameters, such as voltage, charge and discharge current, temperature or ESR (Equivalent Series Resistance). The power diagnostic module 3 can be implemented by prior art means well known to those skilled in the art.

According to the centralized arrangement or the distributed arrangement of the electric power source 2, the power diagnostic module 3 can also be arranged as one or more correspondingly.

In this embodiment, at least one electric brake device 4 can be respectively disposed at a plurality of wheel ends of the vehicle to reduce the speed of the vehicle or to apply parking brake.

The electric brake device 4 may comprise a brake motor. The brake motor may obtain electric power from the electric power source 2 via the power supply circuit of the electric brake device 4, thereby generating a braking force required to reduce the speed of the vehicle.

In this embodiment, the ECU 1 is configured to adjust braking performance of the electric brake device 4 based on the received braking demand and the actual energy level of the electric power source 2.

The braking performance comprises braking force, that is, the braking force and/or braking response time (corresponding to braking retardation) output by the electric brake device 4.

Specifically, the ECU 1 is configured to acquire the actual energy level of the electric power source 2 in real time, and to reduce braking performance of the electric brake device 4 when the actual energy level of the electric power source 2 is lower than a predetermined threshold. The adjustment of the braking performance can be achieved by processing the braking demand obtained from the driver, for example, adjusting the signal acquired from the brake pedal, and also by controlling the electric brake device 4, for example, adjusting the control signal output to the electric brake device 4.

The predetermined threshold is not specifically limited in this embodiment, and the predetermined threshold may be set according to the hardware condition of the electromechanical brake system 7 and the user requirement, and the predetermined threshold may also be divided into multiple predetermined thresholds, to form multiple forms of adjustment.

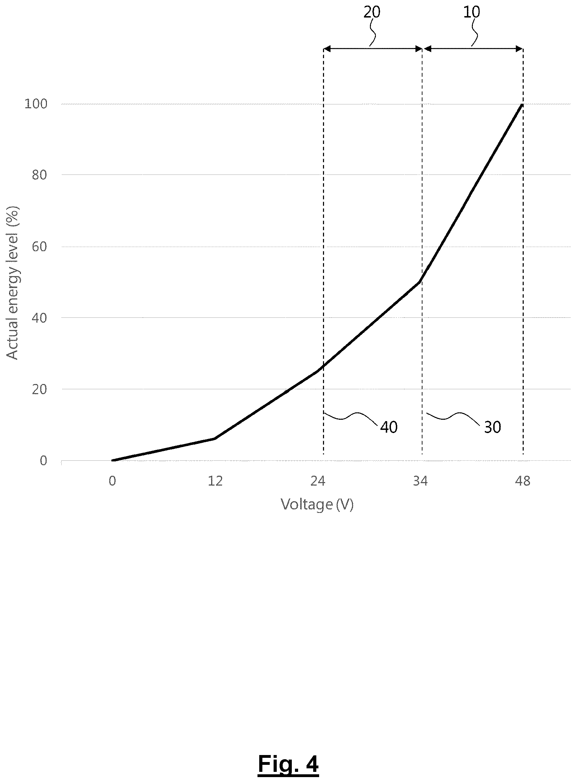

As an embodiment, the electric power source 2 employs the capacitor-based power source, such as an ultra-capacitor group. Depending on the characteristics of the ultra-capacitor group, its voltage value can be used to assess its actual energy level. As shown in **Fig. 4**, when the electric power source 2 exemplarily employs 48 V ultra-capacitor group, the theoretical value of its actual energy level is as shown, for example, at a voltage of 24 V, its actual energy level is 25 %. The braking performance is divided into two levels, a first braking performance 10 and a second braking performance 20, respectively.

Fig. 4 to Fig. 6 each show the case of using the 48 V ultra-capacitor group, but the embodiment is not limited to the 48 V ultra-capacitor group, and the corresponding selection and adjustment can be performed according to actual conditions.

The braking performance is set to the first braking performance 10 when the actual energy level of the capacitor-based power source is higher than or equal to a first predetermined threshold 30 (e.g., set to 50 % actual energy level).

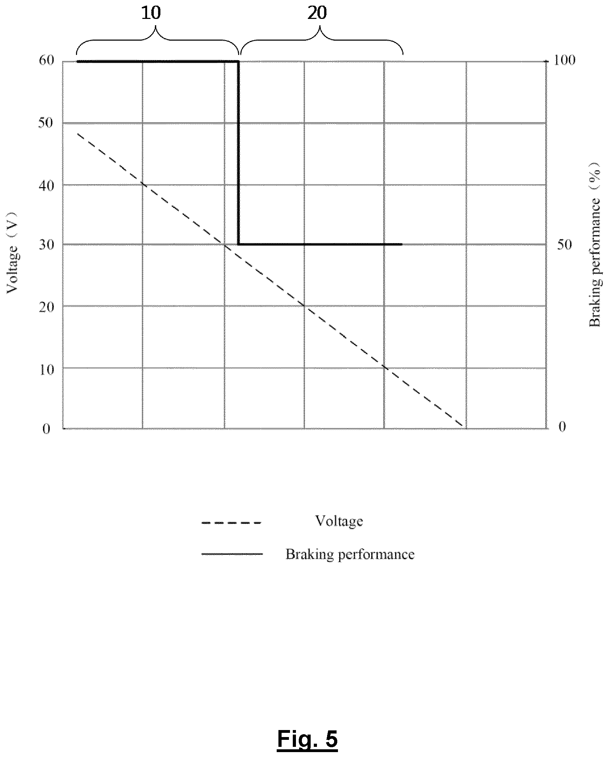

As shown in **Fig. 5**, at the first braking performance 10, the electric brake device 4 maintains 100 % of the braking performance. At this time, the vehicle outputs a corresponding braking force according to the generated braking demand, and the driver obtains a normal braking feeling.

Typically, when the braking energy is consumed, the capacitor-based power source can replenish the energy from, such as the energy storage battery of the vehicle, so that its actual energy level is always maintained above the first predetermined threshold 30. When the brake system or the vehicle system is abnormal, and the capacitor-based power source cannot be replenished, the actual energy level of the capacitor-based power source is consumed below the first predetermined threshold 30, with the energy consumption of the brake. At this time, the ECU 1 sets the braking performance to the second braking performance 20.

At the second braking performance 20, the braking performance of the electric brake device 4 is reduced to a predetermined level, such as 50 % of the braking performance, that is, the output of the braking force is dropped to 50% of the first braking performance 10 and/or the braking response time is extended to 200 % of the first braking performance 10. At this time, the driver will obviously feel the decline in the braking performance when the driver depresses the brake pedal, thereby achieving the effect of prompting an abnormality of the brake system.

When the driver feels that the brake system is abnormal, braking is usually performed to stop the vehicle to ensure safety. By setting an appropriate first predetermined threshold 30, it is possible to ensure that its actual energy level is sufficient to fully brake the vehicle until it is stationary. However, if the driver cannot brake at this time, or if other abnormalities in the system cause the driver's brake input to be unsuccessful, the brake system needs to be forcedly braked.

For example, when the actual energy level of the capacitor-based power source is lower than the first predetermined threshold 30 and continues to decrease, if the vehicle is not stopped, a huge safety hazard may occur when the actual energy level drops to the point where the vehicle cannot be stopped. Therefore, a second predetermined threshold 40 is set (e.g., set to 25 % of the total amount of electricity), and when the actual energy level continues to decrease below the second predetermined threshold 40, the brake system enforces automatic stopping, that is, utilizes the remaining charge decelerates the vehicle to a complete standstill. Therefore, the second predetermined threshold 40 is also the automatic stopping threshold, which should be set to ensure that its corresponding actual energy level is sufficient to completely stop the vehicle. After the vehicle is completely stopped, in order to further increase safety, a parking brake can also be applied. In the case where the electric brake device is integrated with the parking brake function, it can be used directly for applying parking brake, or an additional parking brake device can be used for applying parking brake.

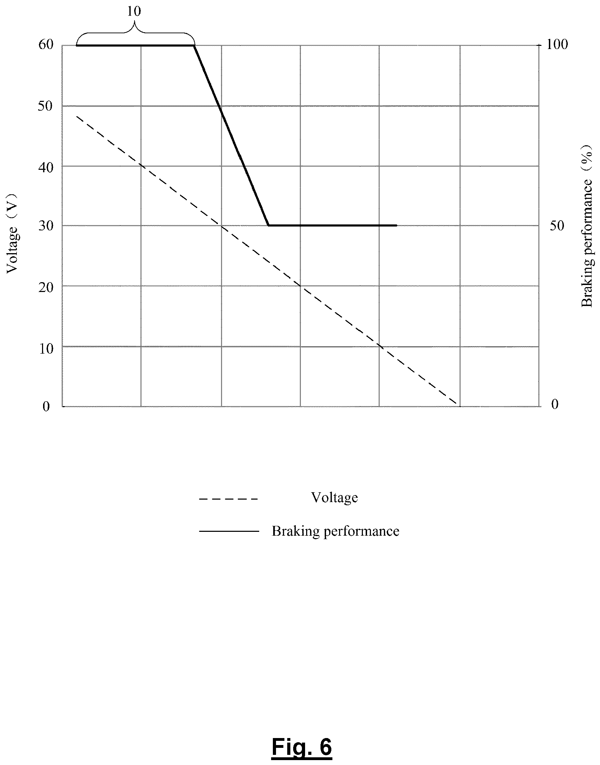

As shown in **Fig. 6**, an alternative solution is that, when the actual energy level of the capacitor-based power source is between the first predetermined threshold 30 and the second predetermined threshold 40, different from the braking performance is always set to a predetermined level, the braking performance is adjusted in a manner that at least partially correlates with the actual energy level. For example, the braking performance is linearly correlated with the actual energy level in the range from 100% to 50%, thereby gradually reducing the braking performance so as to avoid causing maladjustment to the drive due to the sudden change of the braking performance.

As another embodiment, the electromechanical brake system 7 further comprises an alarm module 6. The alarm module 6 is communicatively connected to the ECU 1.

In this embodiment, the alarm module 6 can be implemented by using existing hardware devices such as a speaker, a display screen, and an alarm indicator. It is mainly used to prompt the driver. As long as the corresponding functions can be realized, the type of the alarm module 6 is not specifically limited, and the corresponding selection and adjustment can be performed according to actual conditions and user requirements.

The ECU 1 is configured to output a warning signal to the alarm module 6 when the actual energy level of the capacitor-based power source 2 is lower than a warning threshold to warn the driver that the system will reduce the braking performance, and to prompt the driver the low energy of the capacitor-based power source 2.

In this embodiment, the warning threshold is higher than the first predetermined threshold 30. For example, the warning threshold is set to 56 % of the total amount of electricity. Certainly, the set value of the warning threshold is not specifically limited in this embodiment, and the corresponding adjustment can be performed according to actual conditions and user requirements.

In this embodiment, the second predetermined threshold 40, that is, the automatic stopping threshold is lower than the first predetermined threshold 30. Certainly, the set value of the automatic stopping threshold is not specifically limited in this embodiment, and the second predetermined threshold 40 may be set different from the automatic stopping threshold.

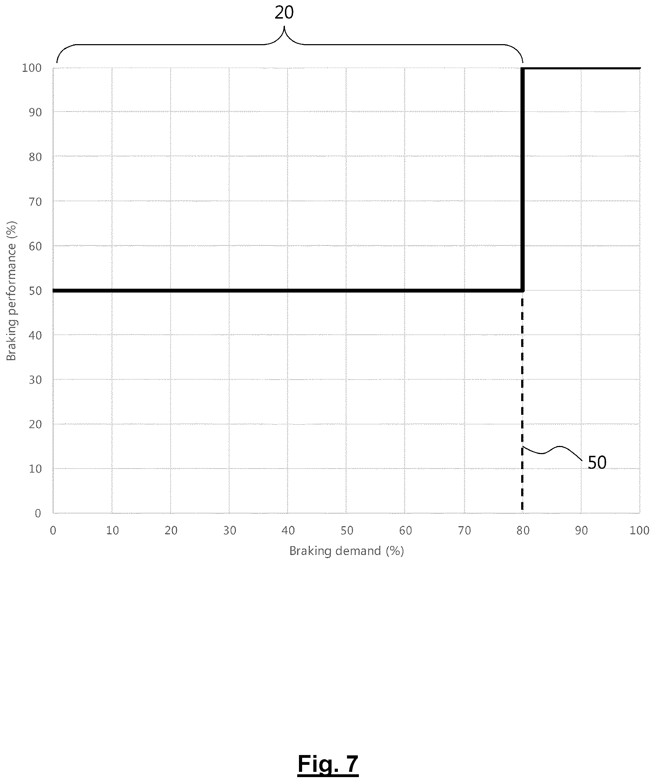

As another embodiment, as shown in **Fig. 7**, when the actual energy level of the power source 2 is lower than the first predetermined threshold 30, the braking performance of the electric brake device 4 is reduced to the second braking performance 20. However, in order to output normal braking force in an emergency, an predetermined emergency threshold 50 is set.

In this embodiment, the predetermined emergency threshold 50 is exemplarily set as 80 % of the maximum braking demand. When the braking demand is from a brake pedal, it is correlated to the stroke of the brake pedal. When the braking demand is lower than the predetermined emergency threshold 50, the braking performance of the electric brake device 4 is reduced to the second braking performance 20 to warn the driver of the abnormality of the brake system. When the braking demand is higher than the predetermined emergency threshold 50, namely the braking demand indicated by the stroke of the brake pedal is higher than 80 % of the maximum braking demand, the reduction of the braking performance of the electric brake device 4 is stopped. Therefore, the electric brake device 4 applies a normal braking force and/or a normal response time so as to avoid not being able to stop the vehicle quickly in an emergency due to the braking performance reduction.

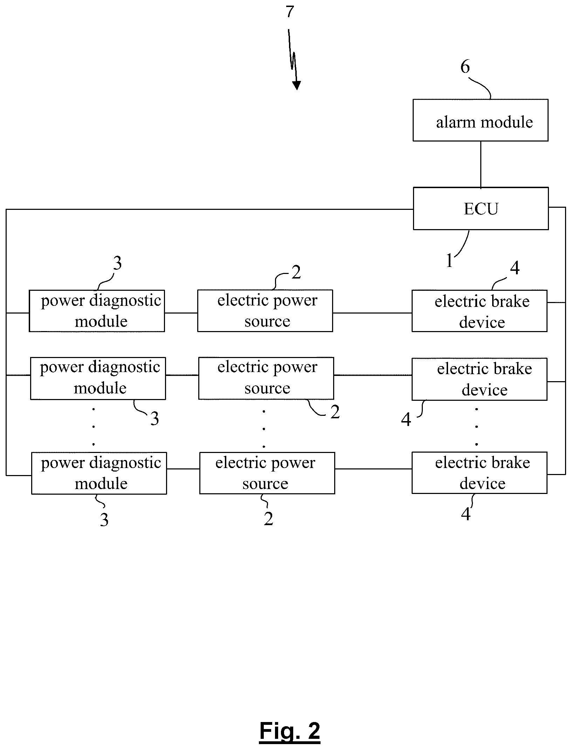

As another embodiment, as shown in **Fig. 2**, the electromechanical brake system 7 comprises a plurality of the electric power sources 2, each of the electric power sources 2 supplies power for at least one of the electric brake devices 4, each of the electric power sources 2 corresponds to a power diagnostic module 3, the power diagnostic module 3 is configured to detect the performance of the corresponding electric power source 2.

In this embodiment, the power diagnostic module 3 adjusts the predetermined threshold according to the performance of the corresponding electric power source 2 to improve the accuracy of controlling the brake system.

Specifically, the performance of the electric power source 2 will attenuate with the use time, and its power storage capacity will decrease, that is, the maximum power storage capacity will be reduced. When the predetermined threshold is set, the performance variation of the electric power source 2 needs to be considered. Therefore, in this embodiment, the predetermined threshold can also be appropriately adjusted according to the degree of attenuation of the electric power source 2.

When the electric power source 2 uses an ultra-capacitor group, its voltage value can be used to assess its actual energy level. When the electric power source 2 uses an energy storage battery, the actual energy level is calculated by comprehensively evaluating the performance of various parameters, such as voltage, charge and discharge current, temperature or ESR.

The ECU 1 is configured to reduce the braking performance of the electric brake device 4 powered by any one of the capacitor-based power sources 2 whose actual energy level is lower than the predetermined threshold or to reduce the braking performance of all of the electric brake devices 4 when the actual energy level of any one of the capacitor-based power sources 2 is lower than the predetermined threshold to simultaneously reduce the braking performance of all of the electric brake devices 4 to the same predetermined level.

Generally, a large vehicle is equipped with a plurality of electric power sources 2 and a plurality of electric brake devices 4, and the above-mentioned method for simultaneously reducing the braking performance is beneficial to the unified management of the electromechanical brake system 7, thereby effectively improving the management efficiency.

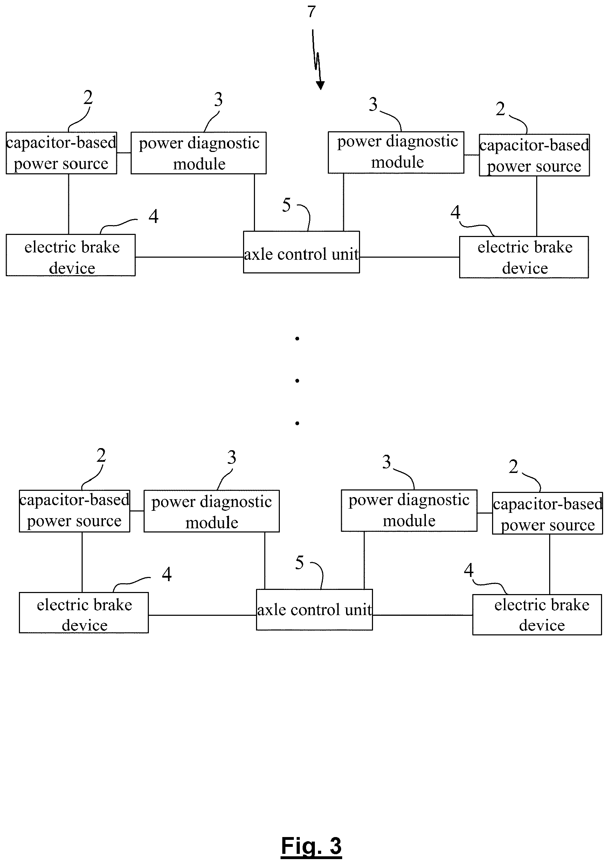

As another embodiment, as shown in **Fig. 3**, the electromechanical brake system 7 further comprises a plurality of axle control units 5, each axle control unit 5 corresponding to an axle, each axle control unit 5 controls at least one electric brake device 4 at each end of the axle.

The axle control unit 5 is configured to adjust the braking performance of the corresponding electric brake device 4 based on the received braking demand and the actual energy level of the electric power source 2. Exemplarily, each axle control unit 5 can integrate a capacitor-based power source 2 and its diagnostic module, and the axle control unit 5 controls the capacitor-based power source 2 to supply power for electric brake devices 4 at both ends of the axle instead of each electric brake device 4 is provided with a capacitor-based power source 2, thereby simplifying the system architecture.

The electromechanical brake system 7 provided by this embodiment can timely adjust the braking performance of the electric brake device and promptly inform the driver of the braking situation, so that the driver can obtain an intuitive braking feeling during the driving process, thereby effectively improving the safety of the vehicle, and at the same time it saves the energy of the electric power source and avoids unnecessary energy consumption, thereby playing a good role in protecting the electromechanical brake system 7.

The present invention further provides an embodiment of a control method of electromechanical brake system 7. The control method is implemented using an electromechanical brake system 7 as described above. The control method comprises, adjusting braking performance of the electric brake device according to an actual energy level of the electric power source, so that a driver can obtain an intuitive braking feeling during the driving process, thereby effectively improving the safety of the vehicle, and at the same time it saves the energy of the electric power source.

In this embodiment, the actual energy level corresponds to the remaining useful amount of energy in an energy storage device, and may also be a correlation index for measuring the remaining useful amount of energy of the energy storage device. As long as it can be used to measure the remaining useful amount of energy of the energy storage device, it can be set according to actual conditions and user requirements.

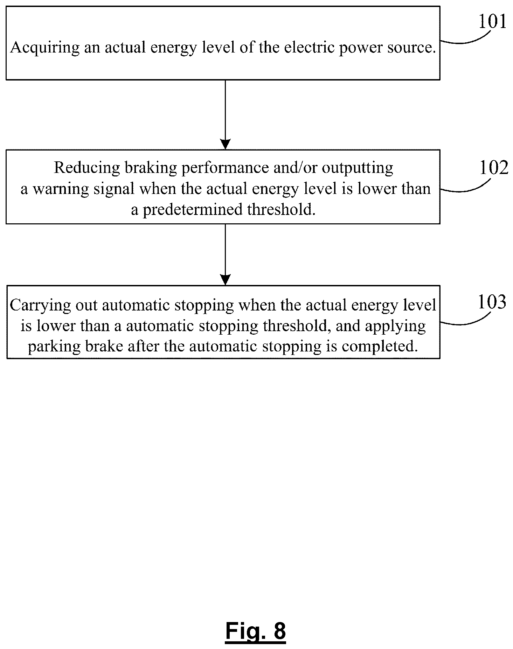

Specifically, as shown in **Fig. 8**, the control method comprises the following steps.

Step 101, acquiring an actual energy level of the electric power source.

In this embodiment, the electric power source comprises a capacitor-based power source and/or a battery as described above.

The electric power source, in addition to employ a centralized arrangement that a single power source supplying energy to each electric brake device, may also employ a distributed arrangement corresponding to the electric brake device. Or the electric brake device at each end of each axle is powered by one electric power source.

According to the centralized arrangement or the distributed arrangement of the electric power source, the power diagnostic module can also be arranged as one or more correspondingly.

In this step, the power diagnostic module detects the performance of the electric power source, and evaluates the power storage capability of the electric power source based on its performance, thereby more accurately determining the actual energy level of the electric power source.

As an embodiment, in this step, the power diagnostic module also sends the detected actual energy level to the ECU in real time.

Step 102, reducing braking performance and/or outputting a warning signal when the actual energy level is lower than a predetermined threshold.

In this step, the ECU adjusts braking performance of the electric brake device based on the received braking demand and the actual energy level of the electric power source.

The braking performance comprises braking force, that is, the braking force. The braking performance further comprises braking response time, or only comprises braking response time.

Specifically, the ECU acquires the actual energy level of the electric power source in real time, and reduces braking performance of the electric brake device when the actual energy level of the electric power source is lower than a predetermined threshold. The adjustment of the braking performance can be achieved by processing the braking demand obtained from the driver, for example, adjusting the signal acquired from the brake pedal, and also by controlling the electric brake device, for example, adjusting the control signal output to the electric brake device.

The predetermined threshold is not specifically limited in this embodiment, and the predetermined threshold may be set according to the hardware condition of the electromechanical brake system 7 and the user requirement, and the predetermined threshold may also be divided into multiple predetermined thresholds, to form multiple forms of adjustment.

In this step, as an embodiment, the electric power source employs the capacitor-based power source, such as an ultra-capacitor group. Depending on the characteristics of the ultra-capacitor group, its voltage value can be used to assess its actual energy level. As shown in Fig. 4, when the electric power source exemplarily employs 48 V ultra-capacitor group, the theoretical value of its actual energy level is as shown, for example, at a voltage of 24 V, its actual energy level is 25%. The braking performance is divided into two levels, a first braking performance 10 and a second braking performance 20, respectively.

As shown in Fig. 5, the braking performance is set to the first braking performance 10 when the actual energy level of the capacitor-based power source is higher than or equal to a first predetermined threshold 30 (e.g., set to 50 %).

At the first braking performance 10, the electric brake device maintains 100% of the braking performance. At this time, the vehicle outputs a corresponding braking force according to the generated braking demand, and the driver obtains a normal braking feeling.

Typically, when the braking energy is consumed, the capacitor-based power source can replenish the energy from, such as the energy storage battery of the vehicle, so that its actual energy level is always maintained above the first predetermined threshold 30. When the brake system or the vehicle system is abnormal, and the capacitor-based power source cannot be replenished, the actual energy level of the capacitor-based power source is consumed below the first predetermined threshold 30, with the energy consumption of the brake. At this time, the ECU sets the braking performance to the second braking performance 20.

At the second braking performance 20, the braking performance of the electric brake device is reduced to a predetermined level, such as 50 % of the braking performance, that is, the output of the braking force is dropped to 50% of the first braking performance 10 and/or the braking response time is extended to 200 % of the first braking performance 10. At this time, the driver will obviously feel the decline in the braking performance when the driver depresses the brake pedal, thereby achieving the effect of prompting an abnormality of the brake system.

In this step, as an embodiment, as shown in Fig. 7, when the actual energy level of the power source 2 is lower than the first predetermined threshold 30, the braking performance of the electric brake device 4 is reduced to the second braking performance 20. However, in order to output normal braking force in an emergency, an predetermined emergency threshold 50 is set.

In this embodiment, the predetermined emergency threshold 50 is exemplarily set as 80 % of the maximum braking demand. When the braking demand is from a brake pedal, it's correlated to the stroke of the brake pedal. When the braking demand is lower than the predetermined emergency threshold 50, the braking performance of the electric brake device 4 is reduced to the second braking performance 20 to warn the driver of the abnormality of the brake system. When the braking demand is higher than the predetermined emergency threshold 50, namely the braking demand indicated by the stroke of the brake pedal is higher than 80 % of the maximum braking demand, the reduction of the braking performance of the electric brake device 4 is stopped. Therefore, the electric brake device 4 applies a normal braking force and/or a normal response time so as to avoid not being able to stop the vehicle quickly in an emergency due to the braking performance reduction.

As shown in Fig. 6, an alternative solution is that, when the actual energy level of the capacitor-based power source is between the first predetermined threshold 30 and the second predetermined threshold 40, different from the braking performance is always set to a predetermined level, the braking performance is adjusted in a manner that at least partially correlates with the actual energy level. For example, the braking performance is linearly correlated with the actual energy level in the range from 100% to 50%, thereby gradually reducing the braking performance so as to avoid causing maladjustment to the drive due to the sudden change of the braking performance.

As another embodiment, the electromechanical brake system 7 further comprises an alarm module. The alarm module is communicatively connected to the ECU.

In this embodiment, the alarm module can be implemented by using existing hardware devices such as a speaker, a display screen, and an alarm indicator. It is mainly used to prompt the driver. As long as the corresponding functions can be realized, the type of the alarm module is not specifically limited, and the corresponding selection and adjustment can be performed according to actual conditions and user requirements.

In this step, outputting a warning signal to the alarm module when the actual energy level of the capacitor-based power source is lower than a warning threshold to warn the driver that the system will reduce the braking performance and to prompt the driver the low energy of the capacitor-based power source .

In this embodiment, the warning threshold is higher than the first predetermined threshold 30. For example, the warning threshold is set to 56 % of the total amount of electricity. Certainly, the set value of the warning threshold is not specifically limited in this embodiment, and the corresponding adjustment can be performed according to actual conditions and user requirements.

Step 103, carrying out automatic stopping when the actual energy level is lower than a automatic stopping threshold, and applying parking brake after the automatic stopping is completed.

In this step, when the driver feels that the brake system is abnormal, braking is usually performed to stop the vehicle to ensure safety. By setting an appropriate first predetermined threshold 30, it is possible to ensure that its actual energy level is sufficient to fully brake the vehicle until it is stationary. However, if the driver cannot brake at this time, or if other abnormalities in the system cause the driver's brake input to be unsuccessful, the brake system needs to be forcedly braked.

For example, when the actual energy level of the capacitor-based power source is lower than the first predetermined threshold 30 and continues to decrease, if the vehicle is not stopped, a huge safety hazard may occur when the actual energy level drops to the point where the vehicle cannot be stopped. Therefore, a second predetermined threshold 40 is set (e.g., set to 25 % of the total amount of electricity), and when the actual energy level continues to decrease below the second predetermined threshold 40, the brake system enforces automatic stopping, that is, utilizes the remaining charge decelerates the vehicle to a complete standstill. Therefore, the second predetermined threshold 40 is also the automatic stopping threshold, which should be set to ensure that its corresponding actual energy level is sufficient to completely stop the vehicle. After the vehicle is completely stopped, in order to further increase safety, a parking brake can also be applied. In the case where the electric brake device is integrated with the parking brake function, it can be used directly for parking brake, or an additional parking brake device can be used for applying parking brake.

In this embodiment, the second predetermined threshold 40, that is, the automatic stopping threshold is lower than the first predetermined threshold 30. Certainly, the set value of the automatic stopping threshold is not specifically limited in this embodiment, and the second predetermined threshold 40 may be set different from the automatic stopping threshold.

As another embodiment, the electromechanical brake system 7 comprises a plurality of the electric power sources, each of the electric power sources supplies power for at least one of the electric brake devices, each of the electric power sources corresponds to a power diagnostic module, the power diagnostic module detects the performance of the corresponding electric power source.

The control method further comprises the following steps.

The power diagnostic module adjusts the predetermined threshold according to the performance of the corresponding electric power source to improve the accuracy of controlling the brake system.

Specifically, the performance of the electric power source will attenuate with the use time, and its power storage capacity will decrease, that is, the maximum power storage capacity will be reduced. When the predetermined threshold is set, the performance variation of the electric power source needs to be considered. Therefore, in this embodiment, the predetermined threshold can also be appropriately adjusted according to the degree of attenuation of the electric power source.

When the electric power source uses an ultra-capacitor group, its voltage value can be used to assess its actual energy level. When the electric power source uses an energy storage battery, the actual energy level is calculated by comprehensively evaluating the performance of various parameters, such as voltage, charge and discharge current, temperature or ESR.

The control method further comprises the following steps.

The ECU reduces the braking performance of the electric brake device powered by any one of the capacitor-based power sources whose actual energy level is lower than the predetermined threshold or reduces the braking performance of all of the electric brake devices when the actual energy level of any one of the capacitor-based power sources is lower than the predetermined threshold to simultaneously reduce the braking performance of all of the electric brake devices to the same predetermined level.

Generally, a large vehicle is equipped with a plurality of electric power sources and a plurality of electric brake devices, and the above-mentioned method for simultaneously reducing the braking performance is beneficial to the unified management of the electromechanical brake system 7, thereby effectively improving the management efficiency.

As another embodiment, the electromechanical brake system 7 further comprises a plurality of axle control units, each axle control unit corresponding to an axle, each axle control unit controls at least one electric brake device at each end of the axle.

The control method further comprises the following steps.

The axle control unit adjusts the braking performance of the corresponding electric brake device based on the received braking demand and the actual energy level of the electric power source.

The present invention further provides an embodiment of a computer readable medium, having stored thereon computer instructions that, when executed by a processor, implement the steps of the control method of the electromechanical brake system 7.

The control method of electromechanical brake system 7 provided by this embodiment can timely adjust the braking performance of the electric brake device and promptly inform the driver of the braking situation, so that the driver can obtain an intuitive braking feeling during the driving process, thereby effectively improving the safety of the vehicle, and at the same time it saves the energy of the electric power source and avoids unnecessary energy consumption, thereby playing a good role in protecting the electromechanical brake system 7.

Service brake is intended to decelerate or stop the vehicle, which is typically operated by the driver via brake pedal or controlled by non-human driving system. Parking brake is intended to ensure that a stopped vehicle remains stationary, which is typically operated by the driver via parking switch. In addition to service brake, the electromechanical brake system 7 and the control method thereof provided by the present invention also apply to parking brake.

An exemplary embodiment is provided. When the brake system or the vehicle system is abnormal, and the capacitor-based power source cannot be replenished, the actual energy level of the capacitor-based power source is consumed below a predetermined threshold, with the energy consumption of the brake. At this time, the brake controller adjusts the braking performance of the brake devices integrated with parking brake function, e.g. by extending the response time to parking brake request, so that the driver can intuitively feel the delay of applying or releasing parking brake when operating the parking switch, thereby achieving the effect of prompting an abnormality to the driver.

### LIST OF REFERENCE NUMERALS

- 1: ECU
- 2: electric power source/ capacitor-based power source
- 3: power diagnostic module
- 4: electric brake device
- 5: axle control unit
- 6: alarm module
- 7: electromechanical brake system
- 10: first braking performance
- 20: second braking performance
- 30: first predetermined threshold
- 40: second predetermined threshold
- 50: predetermined emergency threshold
- 101: step
- 102: step
- 103: step

## Claims

1. An electromechanical brake system (7), the electromechanical brake system (7) comprising an electric power source (2) and at least one electric brake device (4) comprising a brake motor powered by the electric power source (2) to generate a braking force responsive to a braking demand, **characterized in that** the electromechanical brake system (7) is configured to adjust braking performance of the electric brake device (4) according to an actual energy level of the electric power source (2), the electromechanical brake system (7) being configured to reduce braking performance of the electric brake device (4) when the actual energy level of the electric power source (2) is lower than a predetermined threshold.

2. The electromechanical brake system (7) of claim 1, **characterized in that** the electromechanical brake system (7) is configured to stop reducing the braking performance of the electric brake device (4) when the braking demand is higher than a predetermined emergency threshold (50).

3. The electromechanical brake system (7) of claim 1 or 2, **characterized in that** the electromechanical brake system (7) comprises a power diagnostic module (3) for detecting the actual energy level and/or a performance of the electric power source (2).

4. The electromechanical brake system (7) of one of claims 1 to 3, **characterized in that** the braking performance is reduced to a predetermined level.

5. The electromechanical brake system (7) of one of claims 1 to 4, **characterized in that** the electromechanical brake system (7) is configured to output a warning signal when the actual energy level of the electric power source (2) is lower than a warning threshold, the warning threshold is higher than the predetermined threshold.

6. The electromechanical brake system (7) of one of claims 1 to 5, **characterized in that** the electromechanical brake system (7) is configured to carry out automatic stopping when the actual energy level of the electric power source (2) is lower than an automatic stopping threshold, the automatic stopping threshold is lower than the predetermined threshold, wherein preferably a parking brake is applied after the automatic stopping is completed.

7. The electromechanical brake system (7) of one of claims 1 to 6, **characterized in that** the braking performance comprises braking force and/or braking response time.

8. The electromechanical brake system (7) of one of claims 1 to 7, **characterized in that** the electromechanical brake system (7) comprises a plurality of the electric power sources (2), each of the electric power sources (2) supplies power for at least one of the electric brake devices (4),
the electromechanical brake system (7) is configured to reduce braking performance of the electric brake device (4) powered by any one of the electric power sources (2) whose actual energy level is lower than the predetermined threshold or reduce braking performance of all of the electric brake devices (4) when the actual energy level of any one of the electric power sources (2) is lower than the predetermined threshold.

9. The electromechanical brake system (7) of one of claims 1 to 8, **characterized in that** the electromechanical brake system (7) comprises an ECU (1),
the ECU (1) is configured to adjust braking performance of the electric brake device (4) based on the received braking demand and the actual energy level of the electric power source (2).

10. The electromechanical brake system (7) of one of claims 1 to 8, **characterized in that** the electromechanical brake system (7) comprises an axle control unit (5) corresponding to an axle, each axle control unit (5) controls electric brake devices (4) at both ends of the axle,
the axle control unit (5) is configured to adjust braking performance of the electric brake device (4) based on the received braking demand and the actual energy level of the electric power source (2).

11. The electromechanical brake system (7) of one of claims 1 to 10, **characterized in that** the electric power source (2) comprises a capacitor-based power source and/or a battery.

12. A control method of electromechanical brake system (7), the electromechanical brake system (7) comprising an electric power source (2) and at least one electric brake device (4) comprising a brake motor powered by the electric power source (2) to generate a braking force responsive to a braking demand, **characterized in that** the control method comprises adjusting braking performance of the electric brake device (4) according to an actual energy level of the electric power source (2), the adjusting braking performance of the electric brake device (4) according to an actual energy level of the electric power source (2) comprising reducing braking performance of the electric brake device (4) when the actual energy level of the electric power source (2) is lower than a predetermined threshold.

13. The control method of claim 12, **characterized in that** the control method further comprises stopping to reduce the braking performance of the electric brake device (4) when the braking demand is higher than a predetermined emergency threshold (50).

14. The control method of claim 12 or 13, **characterized in that** the control method further comprises detecting the actual energy level and/or a performance of the electric power source (2) through a power diagnostic module (3).

15. The control method of one of claims 12 to 14, **characterized in that** the reducing braking performance of the electric brake device (4) comprises the braking performance being reduced to a predetermined level.

16. The control method of one of claims 12 to 15, **characterized in that** the control method further comprises outputting a warning signal when the actual energy level of the electric power source (2) is lower than a warning threshold, the warning threshold being higher than the predetermined threshold.

17. The control method of one of claims 12 to 16, **characterized in that** the control method further comprises carrying out automatic stopping when the actual energy level of the electric power source (2) is lower than an automatic stopping threshold, the automatic stopping threshold being lower than the predetermined threshold, wherein preferably a parking brake is applied after the automatic stopping is completed.

18. The control method of one of claims 12 to 17, **characterized in that** the braking performance comprises braking force and/or braking response time.

19. The control method of one of claims 12 to 18, **characterized in that** the electromechanical brake system (7) comprises a plurality of the electric power sources (2), each of the electric power sources (2) supplies power for at least one of the electric brake devices (4),
the adjusting braking performance of the electric brake device (4) according to an actual energy level of the electric power source (2) comprises reducing braking performance of the electric brake device (4) powered by any one of the electric power sources (2) whose actual energy level is lower than the predetermined threshold or reducing braking performance of all of the electric brake devices (4) when the actual energy level of any one of the electric power sources (2) is lower than the predetermined threshold.

20. The control method of one of claims 12 to 19, **characterized in that** the electromechanical brake system (7) comprises an ECU (1),
the control method comprises adjusting, by the ECU (1), braking performance of the electric brake device (4) based on the received braking demand and the actual energy level of the electric power source (2).

21. The control method of one of claims 12 to 20, **characterized in that** the electromechanical brake system (7) comprises an axle control unit (5) corresponding to an axle, each axle control unit (5) controlling electric brake devices (4) at both ends of the axle,
the control method comprises adjusting, by the axle control unit (5), braking performance of the electric brake device (4) based on the received braking demand and the actual energy level of the electric power source (2).

22. The control method of one of claims 12 to 21, **characterized in that** the electric power source (2) comprises a capacitor-based power source and/or a battery.

23. A computer readable medium with computer instructions or control logic stored thereon that, when executed by a processor, implement the steps of a control method of the electromechanical brake system (7) of any one of claims 12 to 22.

## Patentansprüche

1. Elektromechanisches Bremssystem (7), wobei das elektromechanische Bremssystem (7) eine elektrische Energiequelle (2) und mindestens eine elektrische Bremsvorrichtung (4) umfasst, die einen von der elektrischen Energiequelle (2) angetriebenen Bremsmotor umfasst, um eine Bremskraft in Reaktion auf eine Bremsanforderung zu erzeugen, **dadurch gekennzeichnet, dass** das elektromechanische Bremssystem (7) so konfiguriert ist, dass es die Bremsleistung der elektrischen Bremsvorrichtung (4) entsprechend einem tatsächlichen Energiepegel der elektrischen Energiequelle (2) einstellt, wobei das elektromechanische Bremssystem (7) so konfiguriert ist, dass es die Bremsleistung der elektrischen Bremsvorrichtung (4) verringert, wenn der tatsächliche Energiepegel der elektrischen Energiequelle (2) niedriger als ein vorbestimmter Schwellenwert ist.

2. Elektromechanisches Bremssystem (7) nach Anspruch 1, **dadurch gekennzeichnet, dass** das elektromechanische Bremssystem (7) so konfiguriert ist, dass es die Reduzierung der Bremsleistung der elektrischen Bremsvorrichtung (4) stoppt, wenn die Bremsanforderung höher ist als ein vorbestimmter Notfallschwellenwert (50).

3. Elektromechanisches Bremssystem (7) nach Anspruch 1 oder 2, **dadurch gekennzeichnet, dass** das elektromechanische Bremssystem (7) ein Leistungsdiagnosemodul (3) zur Erfassung des aktuellen Energieniveaus und/oder einer Leistung der elektrischen Energiequelle (2) umfasst.

4. Elektromechanische Bremsanlage (7) nach einem der Ansprüche 1 bis 3, **dadurch gekennzeichnet, dass** die Bremsleistung auf ein vorgegebenes Niveau reduziert wird.

5. Elektromechanisches Bremssystem (7) nach einem der Ansprüche 1 bis 4, **dadurch gekennzeichnet, dass** das elektromechanische Bremssystem (7) so konfiguriert ist, dass es ein Warnsignal ausgibt, wenn das tatsächliche Energieniveau der elektrischen Energiequelle (2) niedriger als ein Warnschwellenwert ist, wobei der Warnschwellenwert höher als der vorbestimmte Schwellenwert ist.

6. Elektromechanisches Bremssystem (7) nach einem der Ansprüche 1 bis 5, **dadurch gekennzeichnet, dass** das elektromechanische Bremssystem (7) so konfiguriert ist, dass es ein automatisches Anhalten durchführt, wenn das tatsächliche Energieniveau der elektrischen Stromquelle (2) niedriger ist als ein automatischer Anhalteschwellenwert, wobei der automatische Anhalteschwellenwert niedriger ist als der vorbestimmte Schwellenwert, wobei vorzugsweise eine Feststellbremse betätigt wird, nachdem das automatische Anhalten abgeschlossen ist.

7. Elektromechanische Bremsanlage (7) nach einem der Ansprüche 1 bis 6, **dadurch gekennzeichnet, dass** die Bremsleistung die Bremskraft und/oder die Bremsansprechzeit umfasst.

8. Elektromechanisches Bremssystem (7) nach einem der Ansprüche 1 bis 7, **dadurch gekennzeichnet, dass** das elektromechanische Bremssystem (7) eine Vielzahl der elektrischen Energiequellen (2) umfasst, wobei jede der elektrischen Energiequellen (2) Energie für mindestens eine der elektrischen Bremsvorrichtungen (4) liefert,
das elektromechanische Bremssystem (7) so konfiguriert ist, dass es die Bremsleistung der elektrischen Bremsvorrichtung (4) reduziert, die von einer der elektrischen Energiequellen (2) versorgt wird, deren tatsächliches Energieniveau niedriger als der vorbestimmte Schwellenwert ist, oder die Bremsleistung aller elektrischen Bremsvorrichtungen (4) reduziert, wenn das tatsächliche Energieniveau einer der elektrischen Energiequellen (2) niedriger als der vorbestimmte Schwellenwert ist.

9. Elektromechanisches Bremssystem (7) nach einem der Ansprüche 1 bis 8, **dadurch gekennzeichnet, dass** das elektromechanische Bremssystem (7) eine ECU (1) umfasst,
die ECU (1) so konfiguriert ist, dass sie die Bremsleistung der elektrischen Bremsvorrichtung (4) auf der Grundlage der empfangenen Bremsanforderung und des tatsächlichen Energieniveaus der elektrischen Stromquelle (2) einstellt.

10. Elektromechanisches Bremssystem (7) nach einem der Ansprüche 1 bis 8, **dadurch gekennzeichnet, dass** das elektromechanische Bremssystem (7) eine Achssteuereinheit (5) umfasst, die einer Achse entspricht, wobei jede Achssteuereinheit (5) elektrische Bremsvorrichtungen (4) an beiden Enden der Achse steuert,
die Achssteuereinheit (5) so konfiguriert ist, dass sie die Bremsleistung der elektrischen Bremsvorrichtung (4) auf der Grundlage der empfangenen Bremsanforderung und des tatsächlichen Energieniveaus der elektrischen Energiequelle (2) einstellt.

11. Elektromechanisches Bremssystem (7) nach einem der Ansprüche 1 bis 10, **dadurch gekennzeichnet, dass** die elektrische Energiequelle (2) eine kondensatorbasierte Energiequelle und/oder eine Batterie umfasst.

12. Steuerverfahren für ein elektromechanisches Bremssystem (7), wobei das elektromechanische Bremssystem (7) eine elektrische Energiequelle (2) und mindestens eine elektrische Bremsvorrichtung (4) umfasst, die einen von der elektrischen Energiequelle (2) angetriebenen Bremsmotor umfasst, um in Reaktion auf eine Bremsanforderung eine Bremskraft zu erzeugen, **dadurch gekennzeichnet, dass** das Steuerverfahren das Einstellen der Bremsleistung der elektrischen Bremsvorrichtung (4) entsprechend einem tatsächlichen Energieniveau der elektrischen Energiequelle (2) umfasst, wobei das Einstellen der Bremsleistung der elektrischen Bremsvorrichtung (4) gemäß einem tatsächlichen Energiepegel der elektrischen Energiequelle (2) das Reduzieren der Bremsleistung der elektrischen Bremsvorrichtung (4) umfasst, wenn der tatsächliche Energiepegel der elektrischen Energiequelle (2) niedriger als ein vorbestimmter Schwellenwert ist.

13. Steuerungsverfahren nach Anspruch 12, **dadurch gekennzeichnet, dass** das Steuerungsverfahren ferner das Anhalten umfasst, um die Bremsleistung der elektrischen Bremsvorrichtung (4) zu verringern, wenn die Bremsanforderung höher ist als ein vorbestimmter Notschwellenwert (50).

14. Steuerungsverfahren nach Anspruch 12 oder 13, **dadurch gekennzeichnet, dass** das Steuerungsverfahren ferner das Erfassen des tatsächlichen Energieniveaus und/oder einer Leistung der elektrischen Energiequelle (2) durch ein Leistungsdiagnosemodul (3) umfasst.

15. Steuerungsverfahren nach einem der Ansprüche 12 bis 14, **dadurch gekennzeichnet, dass** die Reduzierung der Bremsleistung der elektrischen Bremseinrichtung (4) darin besteht, dass die Bremsleistung auf ein vorgegebenes Niveau reduziert wird.

16. Steuerungsverfahren nach einem der Ansprüche 12 bis 15, **dadurch gekennzeichnet, dass** das Steuerungsverfahren ferner die Ausgabe eines Warnsignals umfasst, wenn das tatsächliche Energieniveau der elektrischen Energiequelle (2) niedriger ist als ein Warnschwellenwert, wobei der Warnschwellenwert höher ist als der vorgegebene Schwellenwert.

17. Steuerungsverfahren nach einem der Ansprüche 12 bis 16, **dadurch gekennzeichnet, dass** das Steuerungsverfahren ferner die Durchführung eines automatischen Anhaltens umfasst, wenn das tatsächliche Energieniveau der elektrischen Energiequelle (2) niedriger ist als ein automatischer Anhalteschwellenwert, wobei der automatische Anhalteschwellenwert niedriger ist als der vorbestimmte Schwellenwert, wobei vorzugsweise eine Feststellbremse angezogen wird, nachdem das automatische Anhalten abgeschlossen ist.

18. Steuerungsverfahren nach einem der Ansprüche 12 bis 17, **dadurch gekennzeichnet, dass** die Bremsleistung die Bremskraft und/oder die Bremsreaktionszeit umfasst.

19. Steuerungsverfahren nach einem der Ansprüche 12 bis 18, **dadurch gekennzeichnet, dass** das elektromechanische Bremssystem (7) eine Vielzahl der elektrischen Energiequellen (2) umfasst, wobei jede der elektrischen Energiequellen (2) Energie für mindestens eine der elektrischen Bremsvorrichtungen (4) liefert,
das Einstellen der Bremsleistung der elektrischen Bremsvorrichtung (4) gemäß einem tatsächlichen Energieniveau der elektrischen Energiequelle (2) das Reduzieren der Bremsleistung der elektrischen Bremsvorrichtung (4) umfasst, die von einer der elektrischen Energiequellen (2) versorgt wird, deren tatsächliches Energieniveau niedriger als der vorbestimmte Schwellenwert ist, oder das Reduzieren der Bremsleistung aller elektrischen Bremsvorrichtungen (4), wenn das tatsächliche Energieniveau einer der elektrischen Energiequellen (2) niedriger als der vorbestimmte Schwellenwert ist.

20. Steuerungsverfahren nach einem der Ansprüche 12 bis 19, **dadurch gekennzeichnet, dass** das elektromechanische Bremssystem (7) eine ECU (1) umfasst,
das Steuerverfahren das Einstellen der Bremsleistung der elektrischen Bremsvorrichtung (4) durch die ECU (1) auf der Grundlage der empfangenen Bremsanforderung und des tatsächlichen Energieniveaus der elektrischen Stromquelle (2) umfasst.

21. Steuerungsverfahren nach einem der Ansprüche 12 bis 20, **dadurch gekennzeichnet, dass** das elektromechanische Bremssystem (7) eine Achssteuereinheit (5) umfasst, die einer Achse entspricht, wobei jede Achssteuereinheit (5) elektrische Bremsvorrichtungen (4) an beiden Enden der Achse steuert,
das Steuerungsverfahren das Einstellen der Bremsleistung der elektrischen Bremsvorrichtung (4) durch die Achssteuereinheit (5) auf der Grundlage der empfangenen Bremsanforderung und des tatsächlichen Energieniveaus der elektrischen Stromquelle (2) umfasst.

22. Steuerungsverfahren nach einem der Ansprüche 12 bis 21, **dadurch gekennzeichnet, dass** die elektrische Energiequelle (2) eine kondensatorbasierte Energiequelle und/oder eine Batterie umfasst.

23. Computerlesbares Medium mit darauf gespeicherten Computerbefehlen oder Steuerlogik, die, wenn sie von einem Prozessor ausgeführt werden, die Schritte eines Steuerverfahrens des elektromechanischen Bremssystems (7) nach einem der Ansprüche 12 bis 22 implementieren.

## Revendications

1. Système de freins électromécaniques (7), le système de freins électromécaniques (7) comprenant une source de puissance électrique (2) et au moins un dispositif de freins électriques (4) comprenant un moteur frein alimenté par la source de puissance électrique (2) pour générer une force de freinage en réponse à un appel de freinage, **caractérisé en ce que** le système de freins électromécaniques (7) est configuré pour ajuster une performance de freinage du dispositif de freins électriques (4) en fonction d'un niveau d'énergie réel de la source de puissance électrique (2), le système de freins électromécaniques (7) étant configuré pour réduire une performance de freinage du dispositif de freins électriques (4) quand le niveau d'énergie réel de la source de puissance électrique (2) est inférieur à un seuil prédéterminé.

2. Système de freins électromécaniques (7) selon la revendication 1, **caractérisé en ce que** le système de freins électromécaniques (7) est configuré pour arrêter de réduire la performance de freinage du dispositif de freins électriques (4) quand l'appel de freinage est supérieur à un seuil d'urgence prédéterminé (50).

3. Système de freins électromécaniques (7) selon la revendication 1 ou 2, **caractérisé en ce que** le système de freins électromécaniques (7) comprend un module de diagnostic de puissance (3) destiné à détecter le niveau d'énergie réel et/ou une performance de la source de puissance électrique (2).

4. Système de freins électromécaniques (7) selon l'une des revendications 1 à 3, **caractérisé en ce que** la performance de freinage est réduite jusqu'à un niveau prédéterminé.

5. Système de freins électromécaniques (7) selon l'une des revendications 1 à 4, **caractérisé en ce que** le système de freins électromécaniques (7) est configuré pour sortir un signal d'avertissement quand le niveau d'énergie réel de la source de puissance électrique (2) est inférieur à un seuil d'avertissement, le seuil d'avertissement étant supérieur au seuil prédéterminé.

6. Système de freins électromécaniques (7) selon l'une des revendications 1 à 5, **caractérisé en ce que** le système de freins électromécaniques (7) est configuré pour exécuter un arrêt automatique quand le niveau d'énergie réel de la source de puissance électrique (2) est inférieur à un seuil d'arrêt automatique, le seuil d'arrêt automatique étant inférieur au seuil prédéterminé, dans lequel de préférence un frein de stationnement est utilisé après exécution de l'arrêt automatique.

7. Système de freins électromécaniques (7) selon l'une des revendications 1 à 6, **caractérisé en ce que** la performance de freinage comprend une force de freinage et/ou un temps de réponse de freinage.

8. Système de freins électromécaniques (7) selon l'une des revendications 1 à 7, **caractérisé en ce que** le système de freins électromécaniques (7) comprend une pluralité de sources de puissance électrique (2), chacune des sources de puissance électrique (2) alimentant une puissance pour l'un au moins des dispositifs de freinage électrique (4), le système de freins électromécaniques (7) étant configuré pour réduire une performance de freinage du dispositif de freins électriques (4) alimenté par l'une quelconque des sources de puissance électrique (2) dont le niveau d'énergie réel est inférieur au seuil prédéterminé ou pour réduire une performance de freinage de la totalité des dispositifs de freins électriques (4) quand le niveau d'énergie réel de l'une quelconque des sources de puissance électrique (2) est inférieur au seuil prédéterminé.

9. Système de freins électromécaniques (7) selon l'une des revendications 1 à 8, **caractérisé en ce que** le système de freins électromécaniques (7) comprend une UCE (1),
l'UCE (1) étant configurée pour ajuster une performance de freinage du dispositif de freins électriques (4) sur la base de l'appel de freinage reçu et du niveau d'énergie réel de la source de puissance électrique (2).

10. Système de freins électromécaniques (7) selon l'une des revendications 1 à 8, **caractérisé en ce que** le système de freins électromécaniques (7) comprend une unité de commande d'essieu (5) correspondant à un essieu, chaque unité de commande d'essieu (5) commandant des dispositifs de freins électriques (4) aux deux extrémités de l'essieu,
l'unité de commande d'essieu (5) étant configurée pour ajuster une performance de freinage du dispositif de freins électriques (4) sur la base de l'appel de freinage reçu et du niveau d'énergie réel de la source de puissance électrique (2).

11. Système de freins électromécaniques (7) selon l'une des revendications 1 à 10, **caractérisé en ce que** la source de puissance électrique (2) comprend une source de puissance basée sur un condensateur et/ou une batterie.

12. Procédé de commande d'un système de freins électromécaniques (7), le système de freins électromécaniques (7) comprenant une source de puissance électrique (2) et au moins un dispositif de freins électriques (4) comprenant un moteur frein alimenté par la source de puissance électrique (2) pour générer une force de freinage en réponse à un appel de freinage, **caractérisé en ce que** le procédé de commande comprend l'étape consistant à ajuster une performance de freinage du dispositif de freins électriques (4) en fonction d'un niveau d'énergie réel de la source de puissance électrique (2), l'étape d'ajustement de performance de freinage du dispositif de freins électriques (4) comprenant de réduire une performance de freinage du dispositif de freins électriques (4) quand le niveau d'énergie réel de la source de puissance électrique (2) est inférieur à un seuil prédéterminé.

13. Procédé de commande selon la revendication 12, **caractérisé en ce que** le procédé de commande comprend en outre l'étape consistant à arrêter de réduire la performance de freinage du dispositif de freins électriques (4) quand l'appel de freinage est supérieur à un seuil d'urgence prédéterminé (50).

14. Procédé de commande selon la revendication 12 ou 13, **caractérisé en ce que** le procédé de commande comprend en outre l'étape consistant à détecter le niveau d'énergie réel et/ou une performance de la source de puissance électrique (2) via un mode de diagnostic de puissance (3).

15. Procédé de commande selon l'une des revendications 12 à 14, **caractérisé en ce que** l'étape consistant à réduire la performance de freinage du dispositif de freins électriques (4) comprend de réduire la performance de freinage jusqu'à un niveau prédéterminé.

16. Procédé de commande selon l'une des revendications 12 à 15, **caractérisé en ce que** le procédé de commande comprend en outre l'étape consistant à sortir un signal d'avertissement quand le niveau d'énergie réel de la source de puissance électrique (2) est inférieur à un seuil d'avertissement, le seuil d'avertissement étant supérieur au seuil prédéterminé.

17. Procédé de commande selon l'une des revendications 12 à 16, **caractérisé en ce que** le procédé de commande comprend en outre l'étape consistant à exécuter un arrêt automatique quand le niveau d'énergie réel de la source de puissance électrique (2) est inférieur à un seuil d'arrêt automatique, le seuil d'arrêt automatique étant inférieur au seuil prédéterminé, dans lequel de préférence un frein de stationnement est utilisé après exécution de l'arrêt automatique.

18. Procédé de commande selon l'une des revendications 12 à 17, **caractérisé en ce que** la performance de freinage comprend une force de freinage et/ou un temps de réponse de freinage.

19. Procédé de commande selon l'une des revendications 12 à 18, **caractérisé en ce que** le système de freins électromécaniques (7) comprend une pluralité de sources de puissance électrique (2), chacune des sources de puissance électrique (2) alimentant une puissance pour l'un au moins des dispositifs de freinage électrique (4),
l'étape consistant à ajuster la performance de freinage du dispositif de freins électriques (4) en fonction d'un niveau d'énergie réel de la source de puissance électrique (2) comprenant de réduire une performance de freinage du dispositif de freins électriques (4) alimenté par l'une quelconque des sources de puissance électrique (2) dont le niveau d'énergie réel est inférieur au seuil prédéterminé ou de réduire une performance de freinage de la totalité des dispositifs de freins électriques (4) quand le niveau d'énergie réel de l'une quelconque des sources de puissance électrique (2) est inférieur au seuil prédéterminé.

20. Procédé de commande selon l'une des revendications 12 à 19, **caractérisé en ce que** le système de freins électromécaniques (7) comprend une UCE (1),
le procédé de commande comprenant en outre l'étape consistant à ajuster, via l'UCE (1), une performance de freinage du dispositif de freins électriques (4) sur la base de l'appel de freinage reçu et du niveau d'énergie réel de la source de puissance électrique (2).

21. Procédé de commande selon l'une des revendications 12 à 20, **caractérisé en ce que** le système de freins électromécaniques (7) comprend une unité de commande d'essieu (5) correspondant à un essieu, chaque unité de commande d'essieu (5) commandant des dispositifs de freins électriques (4) aux deux extrémités de l'essieu,
le procédé de commande comprenant l'étape consistant à ajuster, via l'unité de commande d'essieu (5), une performance de freinage du dispositif de freins électriques (4) sur la base de l'appel de freinage reçu et du niveau d'énergie réel de la source de puissance électrique (2).

22. Procédé de commande selon l'une des revendications 12 à 21, **caractérisé en ce que** la source de puissance électrique (2) comprend une source de puissance basée sur un condensateur et/ou une batterie.

23. Support lisible par ordinateur comprenant des instructions d'ordinateur ou une logique de commande stockées sur celui-ci, qui, quand elles sont exécutées par un processeur, mettent en oeuvre les étapes d'un procédé de commande du système de freins électromécaniques (7) selon l'une des revendications 12 à 22.
